(19) Europäisches Patentamt
European Patent Office
Office européen des brevets

(11) **EP 2 203 779 B1**

(12) **FASCICULE DE BREVET EUROPEEN**

(45) Date de publication et mention
de la délivrance du brevet:
**31.08.2011 Bulletin 2011/35**

(21) Numéro de dépôt: **08843084.8**

(22) Date de dépôt: **10.10.2008**

(51) Int Cl.:
**G02B 27/09** *(2006.01)*

(86) Numéro de dépôt international:
**PCT/FR2008/051846**

(87) Numéro de publication internationale:
**WO 2009/053633 (30.04.2009 Gazette 2009/18)**

(54) **HOMOGENEISEUR A LAME DE PHASE**

HOMOGENISIERER MIT EINER PHASENPLATTE

HOMOGENISER INCLUDING A PHASE PLATE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.10.2007 FR 0758288**

(43) Date de publication de la demande:
**07.07.2010 Bulletin 2010/27**

(73) Titulaires:
• **Ecole Polytechnique**
  **91128 Palaiseau Cedex (FR)**
• **Silios Technologies**
  **13790 Peynier (FR)**

(72) Inventeurs:
• **CANOVA, Federico**
  **F-75007 Paris (FR)**
• **CHAMBARET, Jean-Paul**
  **F-92320 Chatillon (FR)**
• **TISSERAND, Stéphane**
  **F-13006 Marseille (FR)**

• **REVERSAT, Fabien**
  **F-13100 Aix-en-Provence (FR)**

(74) Mandataire: **Pontet, Bernard**
  **Pontet Allano & Associés**
  **25, Rue Jean Rostand**
  **Parc Club Orsay Université**
  **91893 Orsay Cedex (FR)**

(56) Documents cités:
**US-A- 4 521 075          US-A- 4 619 508**
**US-A1- 2002 027 716      US-A1- 2005 023 478**

• **FABIEN PLE MOANA PITTMAN FEDERICO CANOVA JEAN-PAUL CHAMBARET GERARD MOUROU THOMAS PLANCHON: "Suppression of parasitic lasing in large-aperture Ti: Sapphire amplifiers. Amplifying strategies for high rep-rate Petawatt class Ti:sapphire systems" QUANTUM ELECTRONICS AND LASER SCIENCE, 2005 CONFERENCE BALTIMORE, MD, USA 22-27 MAY 2005, PISCATAWAY, NJ, USA,IEEE, 22 mai 2005 (2005-05-22), pages 1848-1849, XP010887854 ISBN: 1-55752-796-2**

EP 2 203 779 B1

**Description**

La présente invention se rapporte à un système pour homogénéiser une impulsion laser émise par une source laser afin d'illuminer de façon homogène une cible.

Elle trouve une application particulièrement intéressante dans le domaine de pompage par laser de milieux solides amplificateurs femtoseconde intense.

En effet l'homogénéité du pompage laser des amplificateurs femtoseconde basés notamment sur la technologie Ti : Saphir est un paramètre essentiel, en raison de la difficulté de pomper les amplificateurs de façon efficace (du point de vue de l'extraction d'énergie), et robuste (du point de vue de l'endommagement du matériau laser). Le seuil de dommage du Ti : Saphir, en régime nanoseconde, est estimé entre 5 et 10J/cm2. Cette valeur ne découle pas d'une étude systématique mais d'une estimation basée sur l'expérience. L'incertitude sur la valeur du seuil oblige les « laseristes », pour préserver les cristaux des risques d'endommagement, à pomper les matériaux actifs à peine au-delà de la fluence de saturation, soit 1J/cm2, avec une extraction d'énergie peu efficace (20%).

Dans le cas d'un pompage à 4J/cm2, par exemple, l'efficacité serait trois fois plus grande (60%). Dans un tel cas, le seuil de dommage du matériau serait très proche de la fluence de pompage nécessaire à une bonne extraction d'énergie dans les amplificateurs de puissance, et toute inhomogénéité du laser de pompe se traduirait en un risque d'endommagement majeur, donc à une réduction forte de la fiabilité ou par là même à une dégradation des performances entraînant l'une et l'autre un surcoût important.

Cette inhomogénéité est due à des profils de pompe jamais totalement maîtrisés avec les techniques d'imagerie utilisées aujourd'hui. Ces profils présentent des modulations ou des points chauds souvent importants et conduisent donc souvent à la destruction des cristaux laser qui de plus sont excessivement chers, leur prix atteignant plusieurs dizaines de milliers d'euros pour les plus grands, et longs à faire croître, jusqu'à 1an. Si l'on considère que entre 60% à 70% du prix d'un amplificateur laser est dû aux lasers de pompes, il est évident que l'on identifie là dans le contrôle de la qualité spatiale des faisceaux laser de pompage, un paramètre majeur pour le développement de systèmes plus performants.

Pour limiter les modulations dans les profils de pompe, on peut songer au fait que lorsque le faisceau se propage sur quelques mètres, sans sortir de la zone de Rayleigh, les modulations sont minimes. Par exemple si nous considérons un laser de pompe qui délivre 1J/cm$^2$ (à 532nm et à 10Hz) sur un faisceau gaussien de diamètre de 10mm, la zone de Rayleigh aura une extension de 140m. Mais en réalité les profils typiques des lasers de pompe sont plus proches d'un profil « top-hat » (supergaussien) que d'une gaussienne car cette forme est imposée pour optimiser la conversion en fréquence et les performances de la source en terme d'énergie utile. Dans le cas d'un profil supergaussien, avec les autres caractéristiques de l'exemple considéré ci-dessus, déjà après quatre mètres de propagation seulement des modulations apparaissent et peuvent devenir dangereuses pour les optiques et les cristaux laser, même si la zone de Rayleigh est largement plus longue. A cause de ces modulations il est difficile d'utiliser dans la pratique une distance de propagation supérieure à 3 - 4 mètres. L'approche de la propagation dans la zone de Rayleigh implique donc des contraintes très fortes sur la configuration des amplificateurs, à cause des faibles distances sur lesquelles le faisceau conserve effectivement son homogénéité.

Autrement, pour limiter les modulations dans les profils de pompe, on peut aussi utiliser la technique consistant à transporter le champ proche (supposé homogène) du faisceau laser de pompage, par imagerie sur le cristal amplificateur. Mais cette technique ne protège en rien ce dernier de toute variation d'intensité éventuelle pouvant apparaître au cours du temps sur le laser de pompage utilisé.

On sait aujourd'hui que pour effectivement limiter ces modulations dans les profils de pompe, il faut homogénéiser la source, ce qui implique la maîtrise complète du transport de l'énergie, à partir des lasers de pompe vers le matériau actif. Grâce à cette maîtrise, il serait possible de pomper les lasers à des régimes à haut rendement d'extraction, mais proches du seuil de dommage et d'éviter les surintensités susceptibles d'endommager les cristaux amplificateurs. D'une façon générale, le but d'un homogénéiseur est d'assurer une répartition d'énergie homogène sur le cristal amplificateur quelque soient les répartitions spatiales initiales des faisceaux incidents.

Dans ce cadre, on connaît un homogénéiseur réfractif à matrices de microlentilles. Un tel homogénéiseur à sous-pupilles réfractif est constitué de deux parties : un élément optique matriciel composé par un ensemble de microlentilles et un composant focalisant. Chaque microlentille représente un sous-pupille. Les microlentilles séparent le faisceau incident en plusieurs segments, et le composant focalisant superpose la projection de chaque sous-pupille sur le plan focal. Cette technique s'appuie sur la faible cohérence spatiale du faisceau laser à l'entrée pour obtenir un effet de moyennage (somme en intensité) des contributions des différents sous-éléments repartis sur toute la zone à pomper.

Cette technique a montré de bonnes performances sur des systèmes de pompage à faible cohérence spatiale. Cependant, sur des systèmes de pompage presque parfaitement cohérentes spatialement, la matrice de microlentilles a induit des modulations de 100%. Même dans le cas des faisceaux à faible cohérence spatiale les meilleures performances d'homogénéisation sont obtenues hors du plan focal, car celui-ci est modulé par les effets de diffraction des structures périodiques, dit effet Talbot. En d'autres termes, cet effet Talbot empêche d'utiliser la répartition d'énergie au plan focal et nécessite d'utiliser des plans où la répartition d'énergie est peu modulé mais moins proche du « top-hat » idéal.

On connaît le document US4521075 décrivant un système pour rendre incohérent spatialement un faisceau laser dirigé vers une cible. Ce système comprend entre la source laser et la cible :

- un composant optique pour introduire une incohérence spatiale entre plusieurs parties du faisceau laser, et
- une lentille de focalisation pour diriger le faisceau laser sur la cible. Il se produit alors un brouillage qui limite les interférences au niveau de la cible.

Cependant, l'expérience a montré que ce système ne permettait pas d'homogénéiser une source autre qu'un laser très incohérent, comme par exemple des diodes laser et les lasers à excimères.

Le document US2005/00 23478 divulgue une lame de phare en forme d'un élément holographique qui permet de modifier le profil d'un faisceau laser.

La présente invention a pour but de remédier aux inconvénients précités en proposant un système d'homogénéisation éliminant les effets d'interférence et de diffraction.

Un autre but de l'invention est de proposer un système capable de garantir une configuration de pompage robuste et fiable pour les amplificateurs à grande puissance moyenne dans les systèmes laser femtoseconde, mis en oeuvre dans un nombre croissant d'installations et destinés à atteindre des puissances crête par exemple au delà du Petawatt.

La présente invention a aussi pour but un système efficace du point de vue de l'extraction d'énergie, permettant de maîtriser l'intensité du faisceau laser sur la cible.

On atteint au moins l'un des buts précités avec un système pour homogénéiser une impulsion laser émise par une source laser afin d'illuminer de façon homogène une cible, ce système comprenant les caractéristiques spécifiées dans la revendication un.

Selon l'invention, les sous-pupilles et les moyens de focalisation sont adaptés pour que lesdits faisceaux lasers retardés se superposent sur la cible en une tache homogène. La lame de phase peut être constituée par une matrice d'éléments optiques appliquant chacun un retard à chaque faisceau élémentaire qui le traverse. Cet élément optique, appelé sous-pupille, génère un faisceau élémentaire orienté dans une direction donnée. La disposition en matrice et l'orientation des sous-pupilles sont déterminées de façon expérimentale ou par des calculs. Les moyens de focalisation sont positionnés pour que les faisceaux élémentaires issus des sous-pupilles viennent se superposer les uns sur les autres. Il y a recouvrement complet des faisceaux élémentaires. Au contraire, dans le système décrit dans le document US4521075, les faisceaux se chevauchent mais ne se superposent pas. En fait, avec le système selon la présente invention, on somme en intensité les différentes parties du faisceau sur l'ensemble de la zone à éclairer. On réalise une véritable homogénéisation et non simplement une incohérence spatiale.

Selon l'invention, la lame de phase comporte N sous-pupilles tel que : N est sensiblement égal à $1/\Gamma^2$, r étant le contraste de la tache homogène. En fait N est un nombre entier le plus proche de la valeur $1/\Gamma^2$.

Le contraste peut être défini comme une mesure statistique de l'homogénéité du profil spatial d'un laser. Il est défini comme le rapport entre l'écart type et la moyenne, c'est à dire $\Gamma = sigma(I)/<I>$, I étant l'intensité. La raison d'une caractérisation statistique de l'homogénéité d'un faisceau vient du fort couplage spatio-temporel présent dans les impulsions laser, à cause du couplage des modes dû à la cohérence partielle spatiale et temporelle. La statistique qui gouverne le contraste est décrite par le modèle mathématique des figures de tavelure (« speckle »). Le théorème d'ergodicité est valable et la statistique qui décrit une réalisation instantanée est valable aussi pour décrire l'évolution dans le temps.

La présente invention permet de faire le lien entre l'intensité de la tache homogène, caractérisée ici par son contraste, et le nombre de sous-pupilles engendrées par la lame de phase. Cela est notamment bénéfique pour des systèmes de pompage laser à haute énergie pour les chaînes CPA-Ti :Saphir qui sont basés sur le Nd :YAG et le Nd : verre, dans des configurations à forte cohérence spatiale. On découple la source laser de la cible avec une espèce de protection optique.

Avec le système selon l'invention, on utilise un homogénéiseur diffractif permettant de décaler les contributions des différentes sous-pupilles. Les faisceaux issus de chaque sous-pupille parcourent un chemin différent. Comme ces différences de parcours sont plus grandes que la durée de cohérence temporelle, les contributions des sous-pupilles sont incohérentes, et donc s'ajoutent en intensité.

La lame de phase a une structure avec une faible périodicité. La lame n'est pas composée par un motif récurrent, car chaque sous pupille présente un dessin différent. Grâce à cette caractéristique la répartition d'énergie au plan focal n'est pas modulée par l'effet Talbot. On peut ainsi travailler sans défocalisation et avec un « top hat » de bonne qualité. La lame de phase permet de détruire la cohérence du faisceau de pompe pour obtenir le pompage le plus incohérent possible sur le matériau laser.

Le système optique d'homogénéisation selon la présente invention permet de garantir une répétabilité du profil spatial en intensité sur le cristal. Cela permet d'obtenir des amplificateurs de puissance plus robustes. La robustesse est liée à la maîtrise de la répartition d'énergie, qui garanti de travailler sans modulations et de ne pas endommager les composants optiques.

Selon l'invention, les moyens de focalisation peuvent comprendre une lentille convergente, dite lentille de champ, disposée de telle sorte que la cible se trouve à la distance de focalisation de cette lentille convergente. Cette lentille convergente permet notamment d'obtenir le champ lointain (la transformée de Fourier) du produit entre le profil du faisceau incident et la fonction de transfert optique de la lame de phase.

Selon une caractéristique avantageuse de l'invention, une information de phase est gravée sur chaque sous-pupille de façon à ce que la tache homogène présente une forme définie par l'information de phase. Cette forme consiste à la fois à une forme géométrique de la tache homogène et à la forme « top-hat » en intensité de cette même tache homogène.

De préférence, cette information de phase est calculée à partir de la transformée de Fourier inverse de la forme de la tache.

Pratiquement, la lame de phase est constitué d'une matrice d'éléments optiques introduisant chacun un retard de phase différents par rapport aux éléments voisins. Chaque élément optique constitue une sous-pupille projetant un faisceau élémentaire vers la cible. Les sous-pupilles définissent la répartition de l'énergie au plan focal de la lentille de champ, et le « moyennage » de l'intensité est proportionnel au nombre de sous-pupilles superposées.

La présente invention permet donc de définir un composant élémentaire (sous-pupille) responsable de la distribution de l'énergie sous la forme voulue. Cette définition peut se faire grâce à l'algorithme de *Gerchberg-Saxton* et peut être validée par simulation.

Selon une caractéristique avantageuse de l'invention, la différence de parcours $\Delta d$ est telle que : $\Delta d = T_c.c$ , « c » étant la vitesse de la lumière dans le milieu entre la lentille et la cible.

Avantageusement, la dimension transverse de la lame de phase est supérieure au diamètre du faisceau laser constituant l'impulsion laser. Par ailleurs, le rapport entre la dimension transverse de chaque sous-pupille et le diamètre du faisceau laser est proportionnel au contraste r, cela permet de figer la géométrie de la lame de phase. En fait, on suppose que l'amplitude du faisceau laser en entrée de la lame de phase est uniforme sur chaque sous-pupille. Grâce à cette hypothèse le profil sur le plan focal est la superposition des taches de diffraction de chaque sous-pupille. Si le faisceau laser n'est pas effectivement uniforme sur chaque sous-pupille, l'écart à cette uniformité sera moyenné par la superposition des différentes taches de diffraction. On prévoit alors que le rapport entre la taille du faisceau et la taille de chaque sous-pupille est suffisamment grand (>10) pour que ces écarts d'homogénéité dans le profil du faisceau se moyennent au plan focal.

Pour une taille de faisceau donnée, la performance d'un homogénéiseur selon l'invention dépend d'un compromis entre la taille des sous-pupilles, qui définit les effets dus à la diffraction et à la cohérence, et le nombre de sous-pupilles.

Selon l'invention, la lentille peut être intégrée à la lame de phase. C'est une approche dite de lentille de Fresnel.

De préférence, la source laser est un laser de pompe et la cible est un milieu solide amplificateur. La cible peut avantageusement être un cristal de saphir dopé au titane. La source laser peut avantageusement être un laser doublé en fréquence choisi parmi les lasers suivants : Nd :YAG ; Nd :verre, Nd :YLF, Yb :verre, Yb :YAG.

Selon un autre aspect de l'invention, il est proposé une application du système pour le pompage de milieux amplificateurs dans une chaîne laser C PA-Ti : Saphir.

D'autres avantages et caractéristiques de l'invention apparaîtront à l'examen de la description détaillée d'un mode de mise en oeuvre nullement limitatif, et des dessins annexés, sur lesquels :

La figure 1 est une vue schématique du système d'homogénéisation selon la présente invention,
La figure 2 est une vue schématique de l'effet d'une lame de phase selon l'invention dans la distribution de l'énergie d'un faisceau laser ;
La figure 3 est une vue schématique illustrant le décalage dû à la différence de parcours en faisceaux élémentaires de deux sous-pupilles adjacents ;
La figure 4a est une vue schématique d'une lame de phase selon l'invention avec deux sous-pupilles en détail ;
La figure 4b est une vue schématique d'une mosaïque de sous-pupilles constituant une lame de phase ; et
La figure 5a est une vue plus en détail d'une sous-pupille et la figure 5b est une vue de la tache homogène sur la cible.

Bien que l'invention n'y soit pas limitée, on va maintenant décrire l'homogénéisation d'un faisceau laser de pompe pour un amplificateur de puissance Ti:Saphir. Le matériau amplificateur Ti:Saphir a son maximum d'absorption autour de 500nm. La quasi-totalité des systèmes de pompage pour les amplificateurs de puissance sont basés sur l'ion Néodyme qu'il soit dans une maille cristalline YAG ou YLF, ou dans une maille vitreuse. Le choix de ce matériau et son utilisation en régime déclenché sont dictés par des réflexions économiques et technologiques. Ces systèmes Néodyme sont excités par lampe flash à des taux de répétition de plusieurs Hz et émettent à 1$\mu$m, et ensuite doublés en fréquence pour atteindre les longueurs d'onde d'absorption du Ti:Saphir.

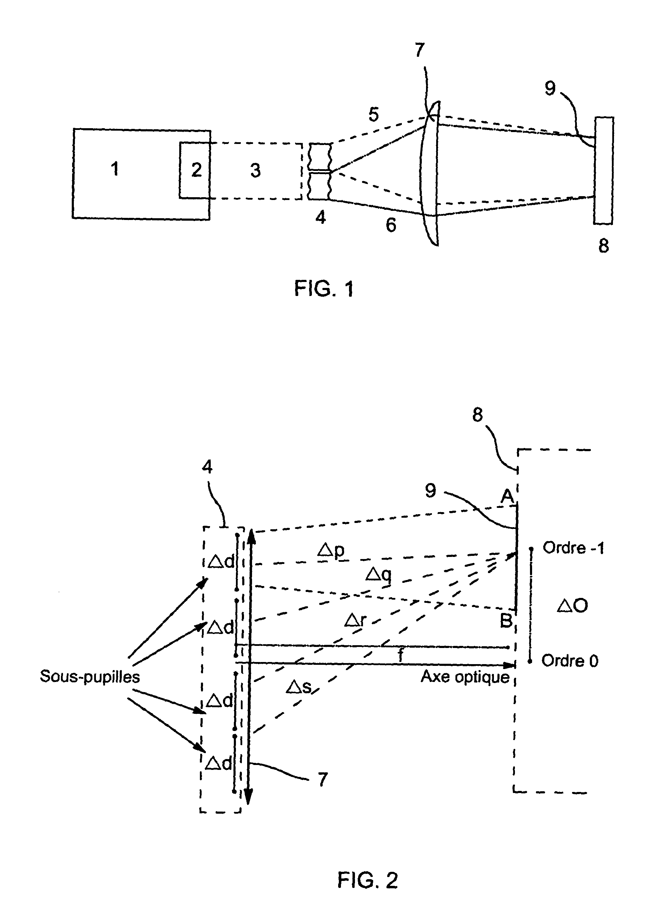

Sur la figure 1 on voit un laser de pompe Nd :YAG 1 comportant à sa sortie un cristal doubleur 2 après amplification. Ce laser de pompe 1 émet une impulsion laser 3 à environ 500 nm vers une lame de phase 4. Cette dernière est représentée de façon schématique en faisant apparaître des marches. Cette lame de phase 4 est un composant optique diffractif constitué d'une matrice de N éléments optiques qui redirigent le faisceau sur la cible selon un parcours de longueur différente pour chaque rayon. Chaque élément optique constitue une sous-pupille. Les marches permettent de représenter la différence de chemin optique entre deux faisceaux élémentaires 5 et 6 issus de deux sous-pupilles différentes. Une lentille de Fourier ou lentille de champ 7 permet de faire converger l'ensemble de faisceaux élémentaires 5, 6 sur une face de l'amplificateur 8. Ces N faisceaux élémentaires 5, 6 se superposent sur cette surface en créant une tache homogène 9.

Des expériences ont montré de très bons résultats pour une impulsion laser dont la longueur de cohérence est largement inférieure à la durée de l'impulsion et de l'ordre de quelques picosecondes.

L'effet de la lame de phase selon l'invention dans la redistribution de l'énergie d'une impulsion laser peut être simplifié comme représenté sur la figure 2. Le schéma représenté montre le principe de la déviation du faisceau avec lame de phase 4 et lentille de Fourier 7 de focale f. La lame de phase 4 crée une image hors d'axe avec un profil homogène et « supergaussien ». La possibilité de sommer les contributions de N sous-pupilles en intensité et non en amplitude vient du différent parcours optique des N faisceaux élémentaires. Sur le schéma de la figure 2, on peut imposer une condition, dérivée de la connaissance de la cohérence temporelle du faisceau laser, sur la différence de parcours entre les rayons de deux sous-pupilles adjacentes. Si la cohérence temporelle d'une impulsion laser est définie par Tc, la différence de parcours entre sous-pupilles Δd nécessaire pour obtenir une superposition incohérente des parties du faisceau est :

$$\Delta d = \Delta q - \Delta p \geq T_c.c$$

avec c vitesse de la lumière, Δq et Δp les parcours optiques des rayons provenant de deux sous-pupilles adjacentes. En pratique, $T_c$ est calculée à partir de la courbe de l'impulsion laser, et on en déduit Δd.

Les points A et B représentent les marges de la tâche homogène 9 sur laquelle est redistribuée l'énergie au plan focal. La lame de phase 4 et la lentille 7 fonctionnent comme un réseau qui déplace tache homogène 9 hors de l'axe optique, dans l'ordre -1. Ce décalage est représenté par la quantité ΔO. Les diamètres des sous-pupilles sont représentés par Δd. Δp, Δq, Δr et Δs représentent les parcours optiques des rayons des différentes sous-pupilles. La tache homogène est à une distance f qui correspond à la focale de la lentille de Fourier 7.

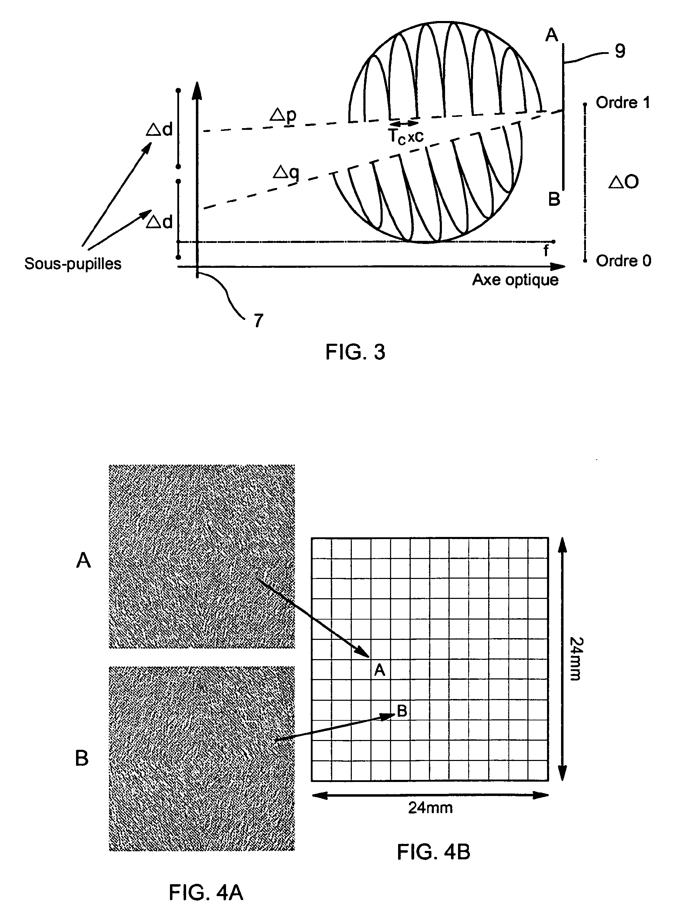

Sur la figure 3, on reprend une partie du schéma de la figure 2. On distingue seulement deux faisceaux élémentaires retardés respectivement de Δq et Δp. Cette figure 3 illustre le rapport entre le décalage dû aux différents parcours des rayons provenant de deux sous-pupilles adjacentes et la cohérence temporelle du faisceau. On peut schématiser le faisceau incident sous la forme d'une enveloppe au-dessous de laquelle sont présents différents modes longitudinaux, tous avec une durée de cohérence temporelle $T_c$.

On peut en outre caractériser le système selon l'invention, en définissant le niveau d'intensité de la tache homogène, c'est-à-dire la concentration résultante des faisceaux élémentaires sur la face de l'amplificateur. L'invention est notamment remarquable par le fait que pour une concentration r souhaitée sur la tache homogène 9, on détermine un nombre N de sous-pupilles qui se somment toutes en intensité sur le plan focal, de façon incohérente et grâce au décalage temporel, de telle sorte que :

$$N = 1/\Gamma^2.$$

On peut encore caractériser le système selon l'invention, en définissant la forme de la tache homogène 9, c'est-à-dire sa forme géométrique (cercle, carré, étoile,...) et le profil de son intensité (« top hat »).

La mise en forme pour obtenir des profils « top-hat » en champ lointain consiste à graver une information de phase sur la lame de phase qui est en silice fondue. Les différents sous-éléments (sous-pupilles) sont assemblés en mosaïque. Le principe de l'homogénéiseur diffractif est de propagation des faisceaux élémentaires dans une direction induite par un système diffractif, de type réseau de diffraction ou lentille de Fresnel. La lentille de champ (éventuellement intégrée à la lame) permet de superposer dans le plan de Fourier les différents faisceaux élémentaires.

Sur la figure 4a on voit deux exemples de sous-pupilles de mise en forme 10 et 11. La figure 4b illustre la structure 12 en matrice de la lame de phase utilisée pour l'homogénéisation. A partir d'une lame composée par deux sous-éléments 10 et 11, calculés avec des conditions initiales différentes, une matrice de 576 éléments (24x24) peut être réalisée. La lame positionne le plan homogène hors-axe.

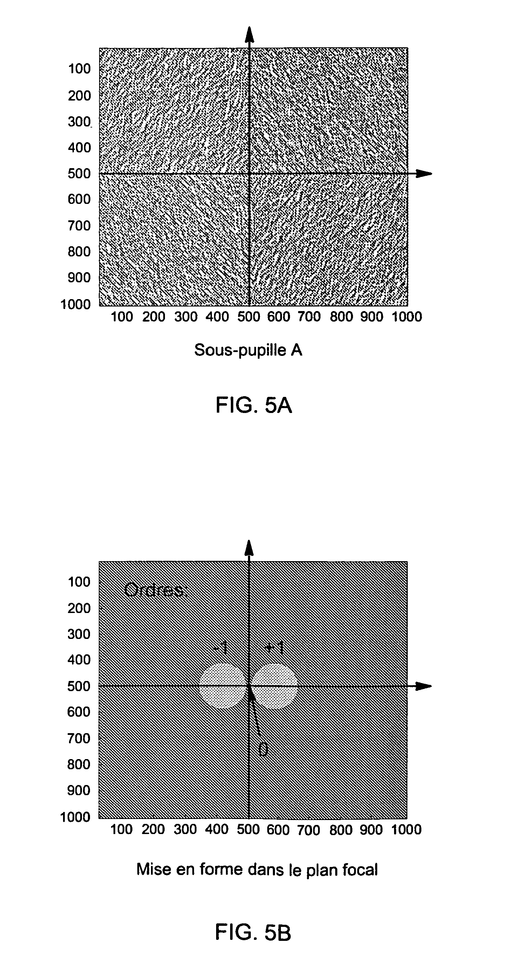

Sur la figure 5a on voit un peu plus en détail la sous-pupille 10. La forme obtenue dans le plan de Fourier grâce au profil gravé dans la sous-pupille dite A est représentée sur la figure 5b. La mise en forme au plan focal de la lentille a été calculée comme la transformée de Fourier numérique du profil gravé. Dans la mise en forme sur la figure 5b, on voit deux profils « top-hat » autour de l'ordre 0, qui correspondent à l'ordre -1 et à l'ordre +1. Dans le composant final 12, structuré en matrice, un réseau est gravé pour optimiser la redirection de l'énergie dans un seul des deux ordres.

Le problème de la reconstruction de la phase à partir de mesures d'intensité a donné naissance à plusieurs techniques et algorithmes de calcul. Parmi les différentes techniques développées au cours des vingt dernières années, les techniques les plus répandues sont celle de Gerchberg-Saxon, pour les systèmes où l'approximation paraxiale est valide, et celle de Yang-Gu, qui généralise la solution de la méthode précédente à n'importe quel système optique. Une approche équivalente est celle de Dixit, qui à servi à optimiser les lames de phase des systèmes du NIF (National Ignition Facility).

L'information directement mesurable expérimentalement dans un système optique est le profil d'intensité. Pour reconstruire un profil spatial défini et pouvoir prédire un comportement lors de la propagation il faut aussi obtenir une information sur la phase spatiale. Cette information peut être récupérée à partir d'instrument spécifiques ou avec des algorithmes itératifs qui utilisent l'information d'intensité de deux profils spatiaux reliés par une relation de transformée de Fourier. La conséquence du développement de ces algorithmes de calcul permet de disposer d'un outil pour définir la phase nécessaire pour obtenir un plan conjugué où les apports des différents sous-éléments sont superposés. Cette technique est utilisée pour calculer les sous-éléments de l'homogénéiseur, et la lentille de Fourier permettant d'obtenir le champ lointain.

Du point de vue pratique, la procédure consiste à définir une mise en forme pour le faisceau dans le plan focal comme profil initial et enregistrer le profil expérimental de la source laser de pompe comme deuxième source de données. Une série d'équations permet de calculer le profil de phase à graver sur le masque pour obtenir le résultat voulu.

A titre d'exemple, on va maintenant décrire le calcul de la phase à partir de l'algorithme de Gerchberg-Saxon.

P1 représente une partie du profil spatial du laser de pompe, avec ses fluctuations typiques, et P2 représente la répartition désirée dans le plan focal. Les deux fonctions d'onde dans les plans P1 et P2 sont représentées par U1 et U2, définies comme :

$$U_1(\overline{X_1}) = \rho 1(\overline{X_1}) \exp\left[i\phi_1(\overline{X_1})\right]$$

$$U_2(\overline{X_2}) = \rho 2(\overline{X_2}) \exp\left[i\phi_2(\overline{X_2})\right]$$

L'axe z est choisi parallèle à l'axe de propagation du laser et les points de coordonnées transverses sont décrits par les matrices $\overline{X_1} = (x_1, y_1)$ et $\overline{X_2} = (x_2, y_2)$. La relation entre les deux plans est donnée par une relation de transformation linéaire $G(\overline{X_2}, \overline{X_1})$ du type

$$U_2(\overline{X_2}) = \int G(\overline{X_2}, \overline{X_1}) U_1(\overline{X_1}) d\overline{X_1} = \hat{G} U_1(\overline{X_1})$$

Dans les systèmes optiques où l'approximation paraxiale est valable $\hat{G}$ est un opérateur unitaire (dans le cadre de l'algorithme de Yang-Gu, valable hors de l'hypothèse de l'approximation paraxiale, $\hat{G}$ est un opérateur d'Hermite). On évalue l'efficacité avec laquelle le profil obtenu avec la transformée du plan initial $GU_1(\overline{X_1})$ se rapproche du profil voulu $GU_2(\overline{X_2})$ en définissant une norme D égale à une « distance quadratique », comme par exemple :

$$D(\rho_1, \phi_1, \rho_2, \phi_2) = \left\| U_2 - \hat{G} U_1 \right\| = \left[\int dx_2 \left| U_2(x_2) - \hat{G} U_1 \right| \right]^{1/2}$$

Sans perdre de généralité dans la solution du problème, on peut imposer à cette norme qu'elle soit égale à 0. Si D = 0 alors on impose que $U_2 = \hat{G} U_1$, c'est-à-dire que le profil voulu et le profil obtenu doivent être exactement égaux.

Mathématiquement cette condition se traduit en un problème de recherche des extrêmes de la fonction D en fonction des variables $\rho_1, \phi_1, \rho_2, \phi_2$.

On peut définir ce problème avec des variables discrètes pour pouvoir le résoudre numériquement à l'aide d'algorithmes. La condition à respecter est que l'échantillonnage des variables, de l'opérateur G et des plans P1 et P2 respecte le théorème de Nyquist-Shannon . Si cette condition est respectée l'information de phase peut être récupérée.

Les équations utilisées dans l'algorithme de reconstruction, écrites sous forme matricielle, sont :

$$\phi_2(x_2) = \arg\left|\hat{G}\rho_1 \exp(i\phi_1)\right|$$

$$\phi_1(x_1) = \arg\left[\hat{A}_D^{-1}\left|\hat{G}\rho_2 \exp(i\phi_2) - \hat{A}_{ND}\rho_1 \exp(i\phi_1)\right|\right]$$

avec $\hat{A}_D = \hat{I}$ et $\hat{A}_{ND} = 0$ si $\hat{G}$ est un opérateur unitaire (condition de l'algorithme Gerchberg-Saxon). La recherche des solutions passe par une méthode itérative s'appuyant sur des hypothèses arbitraires de départ relatives aux phases de début itération dans le plan initial $\phi_1^{(0,0)}$ et final $\phi_2^{(0,0)}$ .

La sortie de la boucle d'itération se fait quand deux pas successifs (m et m+1) changent la phase de moins d'une quantité $\varepsilon_1$, définie de façon arbitraire. La condition mathématique de sortie des itérations est :

$$\int dx_1 \left|\phi_1^{(0,m_1)} - \phi_1^{(0,m_1+1)}\right| \leq \varepsilon_1$$

Où $\phi_1^{(0,m_1)}$ représente la phase initiale.

Cet algorithme permet de définir un profil de phase à graver sur la lame pour obtenir le profil voulu sur le plan focal.

Bien sûr, l'invention n'est pas limitée aux exemples qui viennent d'être décrits et de nombreux aménagements peuvent être apportés à ces exemples sans sortir du cadre de l'invention.

**Revendications**

1. Système pour homogénéiser une impulsion laser émise par une source laser afin d'illuminer de façon homogène une cible, ce système comprenant entre la source laser et la cible :

   - une lame de phase constituée d'une pluralité de sous-pupilles aptes à générer une pluralité de faisceaux lasers retardés vers la cible, la différence de parcours $\Delta d$ entre deux faisceaux lasers retardés adjacents étant supérieure ou égale à la longueur de la cohérence temporelle $T_c C$ de l'impulsion laser, avec C vitesse de la lumière dans le milieu considéré, et
   - des moyens de focalisation ; les sous-pupilles et les moyens de focalisation sont adaptés pour que lesdits faisceaux lasers retardés se superposent sur la cible en une tache homogène,

   **caractérisé en ce qu'**une information de phase est gravée sur chaque sous-pupille de façon à ce que la tache homogène présente une forme définie par l'information de phase.

2. Système selon la revendication 1, **caractérisé en ce que** la lame de phase comporte N sous-pupilles tel que : N est sensiblement égal à $1/\Gamma^2$, r étant le contraste de la tache homogène et qui est notamment défini comme le rapport entre l'écart type et la moyenne, c'est à dire $\Gamma = \text{sigma}(I)/\langle I\rangle$, I étant l'intensité.

3. Système selon la revendication 1 ou 2, **caractérisé en ce que** la cible est disposée sur le plan de Fourier du moyen de focalisation, l'information de phase étant calculée à partir de la transformée de Fourier inverse de la forme de la tache.

4. Système selon l'une quelconque des revendications précédentes, **caractérisé en ce que** les moyens de focalisation comprend une lentille convergente disposée de telle sorte que la cible se trouve à la distance de focalisation de cette lentille convergente.

5. Système selon l'une quelconque des revendications précédentes, **caractérisé en ce que** la différence de parcours Δd est telle que : Δd = $T_c$.c, « c » étant la vitesse de la lumière dans le milieu considéré.

6. Système selon l'une quelconque des revendications précédentes, **caractérisé en ce que** la dimension transverse de la lame de phase est supérieure au diamètre du faisceau laser constituant l'impulsion laser.

7. Système selon l'une quelconque des revendications précédentes, **caractérisé en ce que** le rapport entre la dimension transverse de chaque sous-pupille et le diamètre du faisceau laser constituant l'impulsion laser est proportionnel au contraste de la tache homogène Γ : Γ étant notamment défini comme le rapport entre l'écart type et la moyenne, c'est à dire Γ = sigma(I)/<I>, I étant l'intensité.

8. Système selon l'une quelconque des revendications précédentes, **caractérisé en ce que** la lentille est intégrée à la lame de phase.

9. Système selon l'une quelconque des revendications précédentes, **caractérisé en ce que** la source laser est un laser de pompe et la cible est un milieu solide amplificateur.

10. Système selon la revendication 9, **caractérisé en ce que** la cible est un cristal de saphir dopé au titane.

11. Système selon la revendication 9 ou 10, **caractérisé en ce que** la source laser est un laser doublé en fréquence choisi parmi les lasers suivants : Nd :YAG ; Nd :verre, Nd :YLF, Yb :verre, Yb :YAG.

12. Application du système selon l'une quelconque des revendications précédentes, pour le pompage de milieux amplificateurs dans une chaîne laser CPA-Ti:Saphir.

## Claims

1. System for homogenizing a laser pulse emitted by a laser source in order to illuminate a target homogeneously, said system comprising, between the laser source and the target:

   - a phase plate constituted by a plurality of subpupils capable of generating a plurality of delayed laser beams towards the target, the path difference Δd between two adjacent delayed laser beams being greater than or equal to the length of the temporal coherence $T_c$.C of the laser pulse, where C is the speed of light in the medium in question, and
   - focusing means; the subpupils and the focusing means are adjusted so that said delayed laser beams are superimposed on the target in a homogeneous spot,

   **characterized in that** phase information is etched on each subpupil so that the homogeneous spot has a shape defined by the phase information.

2. System according to claim 1, **characterized in that** the phase plate has N subpupils such that: N is approximately equal to $1/\Gamma^2$, Γ being the contrast of the homogeneous spot and which is notably defined as the ratio of the standard deviation to the mean, i.e. Γ = sigma(I)/<I>, I being the intensity.

3. System according to claim 1 or 2, **characterized in that** the target is located on the Fourier plane of the focusing means, the phase information being calculated from the inverse Fourier transform of the shape of the spot.

4. System according to any one of the previous claims, **characterized in that** the focusing means comprise a convergent lens arranged in such a way that the target is located at the focal distance of said convergent lens.

5. System according to any one of the previous claims, **characterized in that** the path difference Δd is such that: Δd = $T_c$.c, "c" being the speed of light in the medium in question.

6. System according to any one of the previous claims, **characterized in that** the transverse dimension of the phase plate is greater than the diameter of the laser beam constituting the laser pulse.

7. System according to any one of the previous claims, **characterized in that** the ratio of the transverse dimension of each subpupil to the diameter of the laser beam constituting the laser pulse is proportional to the contrast of the homogeneous spot $\Gamma$; $\Gamma$ being the contrast of the homogeneous spot and which is notably defined as the ratio of the standard deviation to the mean, i.e. $\Gamma$ = sigma(I)/<I>, I being the intensity.

8. System according to any one of the previous claims, **characterized in that** the lens is integral with the phase plate.

9. System according to any one of the previous claims, **characterized in that** the laser source is a pump laser and the target is an amplifying solid medium.

10. System according to claim 9, **characterized in that** the target is a titanium-doped sapphire crystal.

11. System according to claim 9 or 10, **characterized in that** the laser source is a frequency-doubled laser selected from the following lasers: Nd:YAG; Nd:glass, Nd:YLF, Yb:glass, Yb:YAG.

12. Application of the system according to any one of the preceding claims, for the pumping of amplifying media in a CPA-Ti:Sapphire laser circuit.

**Patentansprüche**

1. System zum Homogenisieren eines durch eine Laserquelle ausgesandten Laserpulses, um ein Ziel homogen anzustrahlen, wobei dieses System zwischen der Laserquelle und dem Ziel umfasst:

   - eine Phasenplatte, die aus einer Vielzahl von Unterpupillen besteht, welche geeignet sind, eine Vielzahl von verzögerten Laserstrahlen in Richtung des Ziels zu erzeugen, wobei der Streckenunterschied $\Delta d$ zwischen zwei benachbarten verzögerten Laserstrahlen größer als die oder gleich der Länge der zeitlichen Kohärenz $T_c$.C des Laserpulses, mit C Geschwindigkeit des Lichts in dem betrachteten Medium, ist, sowie
   - Fokussierungsmittel, die Unterpupillen und die Fokussierungsmittel sind ausgelegt, damit die verzögerten Laserstrahlen sich an dem Ziel in einem homogenen Fleck überlagern,

   **dadurch gekennzeichnet, dass** auf jede Unterpupille eine Phaseninformation aufgeprägt ist, so dass der homogene Fleck eine durch die Phaseninformation definierte Form aufweist.

2. System nach Anspruch 1, **dadurch gekennzeichnet, dass** die Phasenplatte N Unterpupillen umfasst, derart, dass N im Wesentlichen gleich $1/\Gamma^2$ ist, wobei $\Gamma$ der Kontrast des homogenen Flecks ist, der insbesondere als das Verhältnis zwischen der Standardabweichung und dem Mittelwert, das heißt $\Gamma$ = sigma(I)/<I>, wobei I die Intensität ist, definiert ist.

3. System nach Anspruch 1 oder 2, **dadurch gekennzeichnet, dass** das Ziel in der Fourier-Ebene des Fokussierungsmittels angeordnet ist, wobei die Phaseninformation anhand der inversen Fourier-Transformierten der Form des Flecks berechnet wird.

4. System nach einem der vorstehenden Ansprüche, **dadurch gekennzeichnet, dass** das Fokussierungsmittel eine konvergierende Linse umfasst, die derart angeordnet ist, dass sich das Ziel im Fokussierungsabstand von dieser konvergierenden Linse befindet.

5. System nach einem der vorstehenden Ansprüche, **dadurch gekennzeichnet, dass** der Streckenunterschied $\Delta d$ derart ist, dass $\Delta d = T_c.c$ ist, wobei "c" die Geschwindigkeit des Lichts in dem betrachteten Medium ist.

6. System nach einem der vorstehenden Ansprüche, **dadurch gekennzeichnet, dass** die Querabmessung der Phasenplatte größer als der Durchmesser des den Laserpuls bildenden Laserstrahls ist.

7. System nach einem der vorstehenden Ansprüche, **dadurch gekennzeichnet, dass** das Verhältnis zwischen der Querabmessung einer jeden Unterpupille und dem Durchmesser des den Laserpuls bildenden Laserstrahls proportional zum Kontrast des homogenen Flecks $\Gamma$ ist, wobei $\Gamma$ insbesondere als das Verhältnis zwischen der Standardabweichung und dem Mittelwert, das heißt $\Gamma$ = sigma(I)/<I>, wobei I die Intensität ist, definiert ist.

8.  System nach einem der vorstehenden Ansprüche, **dadurch gekennzeichnet, dass** die Linse in die Phasenplatte integriert ist.

9.  System nach einem der vorstehenden Ansprüche, **dadurch gekennzeichnet, dass** die Laserquelle ein Pumplaser ist und das Ziel ein festes Verstärkungsmedium ist.

10. System nach Anspruch 9, **dadurch gekennzeichnet, dass** das Ziel ein titandotierter Saphirkristall ist.

11. System nach Anspruch 9 oder 10, **dadurch gekennzeichnet, dass** die Laserquelle ein frequenzverdoppelter Laser ist, der aus den folgenden Lasern ausgewählt ist: Nd : YAG, Nd : Glas, Nd : YLF, Yb : Glas, Yb : YAG.

12. Anwendung des Systems nach einem der vorstehenden Ansprüche für das Pumpen von Verstärkungsmedien in einer CPA-Ti:Saphir-Laserkette.

FIG. 1

FIG. 2

FIG. 3

FIG. 4A

FIG. 4B

Sous-pupille A

FIG. 5A

Mise en forme dans le plan focal

FIG. 5B

## RÉFÉRENCES CITÉES DANS LA DESCRIPTION

**Documents brevets cités dans la description**

- US 4521075 A

- US 20050023478 A